# EUROPEAN PATENT APPLICATION

(11) **EP 4 393 299 A1**
(43) Date of publication of application: **03.07.2024**
(21) Application number: 23220869.4
(22) Date of filing: 30.12.2023
(51) Int. Cl.: A01G 13/02

(54) **METHOD FOR BIOLOGICAL CONTROL OF INVASIVE EXOTIC SPECIES**

(30) Priority: 30.12.2022 NL 2033889
(71) Applicant: Van den Herik, Johannes, 6732 DG Harskamp (NL)
(72) Inventor: van den Herik, Johannes, 6732 DG HARSKAMP (NL); van den Berg, Cornelis, 6744 PV EDERVEEN (NL)
(74) Representative: de Hoog, Johannes Hendrik

(57) **Abstract**

The application relates to a method for biological control of invasive exotic species in soil, comprising defining a treatment surface for the soil to be treated, optionally enriching the soil associated with the treatment surface with nutrients for micro-organisms in the soil and applying a layer of raw organic material over the soil to be treated.

## Description

### TECHNICAL FIELD

The invention relates to a method for biological control of invasive exotic species. In particular, the invention relates to a method for killing the roots of invasive plants in soil. More particularly, the invention relates to a method for biological control of invasive exotic species such as Asian knotweed, Canadian goldenrod, giant balsam and giant hogweed.

### BACKGROUND

In the early 19th century, Asian knotweed (Japanese, Bohemian and Sakhaline) was introduced into the Netherlands as a garden plant. Subsequently, the species started to naturalise mainly from 1950 and has since spread widely. Nowadays, spread occurs mainly through soil contaminated with rhizomes, through careless mowing management where stem parts are spread, and through dumping of garden waste. Knotweed has a major negative impact on biodiversity at the growth sites where it occurs, but can also cause considerable economic damage. The stability of dykes and embankments along watercourses can be reduced and knotweed can cause damage to, for example, pavements, sewer systems and foundations. Knotweed is very difficult to control due to its extensive root system that can reach great depths.

There are many known control methods used to control knotweed on a site. Covering with a geotextile, with a soil column on top to stabilise the fabric, suffocates the knotweed roots. However, the fabric must remain in place for three years or more for the covering method to be successful. Another method is to excavate the soil containing knotweed roots and to dispose them. This method involves transport costs. An alternative method is to excavate and sieving the soil on site to remove root parts. The soil is then backfilled. Other methods include biweekly or monthly mowing, pulling out, chemical control, and using hot water. However, these methods are labour-intensive as the treatment has to be repeated several times. The use of chemical susbtances, for example glyphosate, may have harmful effects on soil and groundwater.

Another method consists of removing above-ground plant parts by a mowing-suction combination, then milling the soil to shred the top layer of roots. Spreading a vegetable product on the soil, mixing the vegetable product into the soil by deep digging and covering the soil with an oxygen-tight foil. After the the root parts have been controlled, the oxygen-tight cover is removed. This method requires a relatively large number of actions to be taken before the soil can be used again. Furthermore, biodiversity in the soil can only recover after the oxygen-tight cover has been removed.

NL20223091 describes a method in which soil containing invasive exotic species is excavated from a plot and dosed to a soil heating section of a soil treatment facility. The soil is transported through and heated in the soil heating section such that the average temperature of the soil coming out of the soil heating section has an average temperature higher than a preset lower limit. Finally, the heated soil is returned to the plot. Due to the heating, the plant roots die and decompose in the soil.

### SUMMARY OF THE INVENTION

An object of the invention is to provide an improved and alternative method for biological control of invasive exotic species that remedies at least one of the aforementioned shortcomings.

According to an aspect of the present technology, this objective is achieved by a method for biological control of invasive exotic species on a plot having the features of claim 1. Advantageous embodiments and further ways of implementing the present technology can be achieved by the measures mentioned in the dependent claims.

A method for biological control of invasive exotic species in soil according to the present technology comprises the following actions. Defining a treatment area of the soil to be treated; and applying a layer of raw organic material over the soil to be treated.

Surprisingly, it is found that applying a layer of raw organic material causes the roots of plants in the soil to die and subsequently decompose. The raw organic material on the soil forms an insulating blanket over the soil and starts to decompose and ferment. This will warm up the soil to a certain extent and activate micro-organisms in the soil. These start looking for organic substances for their dissimilation process. This causes the aerobic micro-organisms to consume extra oxygen, so that the soil under the layer of raw organic material does not contain enough oxygen for the dissimilation process in the roots. This makes the roots vulnerable and the micro-organisms in the soil start using the roots as a source of nutrition. As a result, the micro-organisms penetrate the roots and consume the oxygen in the roots, causing the roots to further die and be digested by the micro-organisms. Another advantage is that soil life can settle in the layer of raw organic material above the soil and slowly settle back in the soil from top to bottom while the roots in the soil are controlled from top to bottom with a similar speed. This process is not possible when the soil is covered with an oxygen-tight foil. The soil can then only recover after the oxygen-tight foil is removed and oxygen can penetrate the soil again.

In a further embodiment, a layer of decontaminated soil and/or biomass of 5 - 25 cm is applied over the layer of raw organic material. This protects the raw organic material from being blown away by the wind and makes it less attractive for animals to be eaten. It is also an extra insulation layer, slowing down the cooling of the soil and the micro-organisms remain more active. Some examples of biomass to be used are: wood shreds, tree bark and cocoa shells. The biomass will slowly decompose to become again nutrients for plants that will grow on the ground.

Surprisingly, it is found that when the layer of raw organic material includes one or more products chosen from the group consisting of freshly mown grass, silage grass, chopped maize, chopped miscanthus, and cuttings from green manures, good results are achieved.

Surprisingly, it is found that when the layer of raw organic material comprises at least 10 grams of sugars per square metre, a positive effect is already achieved in controlling invasive exotic species.

A layer of raw organic material with a thickness between 1 and 50 cm is found to give good results while the costs for the layer are acceptable.

In a further embodiment, before applying the layer of raw organic material, the soil associated with the treatment area is enriched with nutrients for micro-organisms in that soil. By enriching the soil with nutrients, micro-organisms in the soil are additionally activated. These start looking for organic substances for their dissimilation process. The micro-organisms will also multiply faster. As a result, the aerobic micro-organisms consume even more oxygen, causing the soil under the layer of raw organic material to contain more quickly insufficiently oxygen for the dissimilation process in the roots. This causes the roots to become vulnerable more quickly and the micro-organisms in the soil are more likely to use the roots as a source of nutrition. As a result, the microorganisms penetrate the roots and consume the oxygen in the roots, causing the roots to die faster and be digested by the microorganisms.

In an embodiment, the nutrients for micro-organisms comprise a sugar-rich product. Surprisingly, molasses has been found to be a suitable sugar-rich product. A sugar-rich product is a product or material that contains at least 30 wt % sugars, i.e. monosaccharides and disaccharides. Monosaccharides, particularly glucose, are used by organisms as an energy source for the dissimilation process in cells of said organisms.

An embodiment is characterised in that enriching the soil with nutrients comprises spreading over the soil an amount of 100 - 2500 grams of sugars per square metre.

Another embodiment is characterized in that enriching the soil with nutrients comprises adding the sugar-rich product to the soil in such a way that the soil contains an amount of 0.2 - 5 grams of sugars per liter of soil.

An embodiment of the method is characterized in that the invasive exotic species comprises one or more of Japanese knotweed, Asian knotweed, Canadian goldenrod, cyperus, giant balsam and giant hogweed.

### DETAILED DESCRIPTION OF EMBODIMENTS

Described are embodiments of the method for biological control of invasive exotic species present in soil. Invasive exotic species according to the present description are all plants that grow in places where they are not desired. The invasive exotic species grow with its roots or rhizomes in the ground. The invasive exotic species may be present in the soil as roots, or chopped parts of roots and/or chopped above-ground parts of plants that are mixed with the soil. The method is particularly suitable for controlling invasive plants that spread via rhizomes. Asian knotweed, Canadian goldenrod, giant balsam, giant hogweed and couch grass are some examples of invasive plants that can be controlled with the method.

The methods described have in common feature that a layer of raw organic material is applied over soil to be treated.

The term "soil to be treated" refers to any form of soil containing plant parts of invasive exotic species. For example, this could be the soil of a section of a plot where the above-ground parts of the invasive exotic species have been mowed off and optionally removed and the underground parts of the invasive exotic species still remain in the soil. If the soil is not cultivated by ploughing or milling, the roots will still be in tact. If the soil is cultivated by ploughing or milling, the underground plant parts will be chopped, so that the underground plant parts appear as smaller parts in the cultivated top layer of the soil. The soil to be treated can be treated on site (in situ) to control invasive exotic species. It is also possible that the soil to be treated is excavated soil that comes from a plot on which invasive exotic species grew. The excavated soil in which the plant parts are mixed is then treated in a depot and can be reused after the plant parts have been killed. The latter is called depot treatment.

The term "organic material" refers to all substances consisting of (dead) plants or animal matter, with a hydrocarbon structure. Organic material can be in the form of unprocessed plants, plant remains, animals, animal remains (unprocessed here means: no processing, or only an operation that only consists of cutting, such as mowing or chopping). Organic materials such as grass, straw, leaves, wood, etc., are therefore also included in the term "organic material". Substances obtained by processing (parts of) plants or animals that includes more than just cutting, such as isolated proteins, fats and carbohydrates, are also included in the term "organic material".

The term "non-living organic material" refers to organic material that is not in the form of unprocessed plants, plant remains, animals, animal remains (unprocessed here means no processing, or only an operation that only consists of cutting, such as mowing or chopping). Organic materials such as grass, straw, leaves, wood, etc., are not included in the term "non-living organic material". On the other hand, organic materials obtained by processing (parts of) plants or animals that includes more than just cutting, such as, for example, isolated proteins, fats and carbohydrates, are included in the term "non-living organic material".

The term "raw organic material" refers to organic material in the form of unprocessed plants, plant remains, animals, animal remains (unprocessed here means no processing, or only an operation that only consists of cutting, such as mowing or chopping). Raw organic material is material in which plant remains are still recognisable. Thus, organic materials such as grass, straw, leaves, wood shreds, bark, cocoa shells, etc., are also included in the term "raw organic material". Substances obtained by processing (parts of) plants or animals that include more than just cutting, such as isolated proteins, fats and carbohydrates, are not included in the term "raw organic material".

The term "sugars" is used for the group of mono- and disaccharides. Monosaccharides are simple sugars. Examples of monosaccharides are glucose or dextrose, fructose and galactose. Disaccharides are 2 monosaccharides that are linked together. Examples of disaccharides are sucrose, lactose and maltose.

The term "decontaminated soil" refers to soil or soil in which no viable parts of invasive exotic species are present.

The term "nutrients for micro-organisms" refers to all organic components, preferably selected from the group consisting of proteins, carbohydrates and fats used by micro-organisms for their respiration and growth.

A first "in situ" method for controlling invasive exotic species comprises the following steps:
1) defining a treatment area by determining where the invasive exotic species to be controlled are growing in the soil;
2) removing above-ground plant parts on at least the treatment area by, for example, using a mow-suction combination;
3) optionally enriching the soil at the treatment area with nutrients for microorganisms in the soil to be treated by distributing a sugar-rich product over the soil through spreading or spraying;
4) applying a layer of raw organic material over the soil to be treated; and
5) optionally applying a layer of decontaminted soil, biomass, or a mixture of decontaminated soil and biomass over the layer of organic material.

In the second step, the above-ground parts/loof/green/bio diversity are mowed and removed. The removed material can be processed or treated into a reusable product. A reusable product can be a building material and/or fuel.

In the third optional step, a homogeneous sugar-rich layer is applied to the soil, which serves as nutrients for the micro-organisms in the soil. In an advantageous embodiment, 10 - 2,500 grams of sugars are distributed per square metre. The sugar-rich material is not a particular product but is found in products that are sugar-rich. Molasses has been found to be a suitable sugar-rich product. Molasses can contain between 50 wt.% and 75 wt.% sugars in the form of monosaccharides and disaccharides. The amount of sugars used per square metre is determined by the type of soil, the sugar content and thickness of the applied layer of raw organic material.

In the fourth step, a layer of raw organic material is applied over the nutrient-enriched soil. The raw organic material can be in the form of cut grass, straw, hay, silage, roadside grass, ditch grass, chopped maize, chopped miscanthus and grass clippings from green manures. This cover will activate biological activity in the soil. On the one hand, the layer of raw organic material has an insulating effect that allows the temperature of the soil to rise due to the biological activity of the micro-organisms and the soil will lose its heat less likely the air above the ground. On the other hand, the layer of raw organic material is also food for the micro-organisms in the soil. Due to the activation of the soil life by the nutrients dispersed in the third step, the micro-organisms will start to digest and ferment the raw organic material.

Important factors in the decomposition of organic material are soil life, nitrogen and oxygen. The incorporation of undigested organic material leads to temporary fixation of nitrogen and a reduction of the oxygen level in the soil by activation of micro-organisms. Good decomposition is achieved with the right ratio of soil particles, organic material, air (= oxygen), soil life, and optionally nitrogen.

Fermentation is the breakdown of organic materials into simpler substances. Microorganisms such as bacteria and fungi are known for their ability to ferment organic substances.

The upper part of the layer of organic material that is in contact with the air and thus oxygen will continue to be digested by the micro-organisms present. However, due to digestion, the micro-organisms will consume oxygen and the oxygen from the air above the soil may penetrate less deeply. This will make it increasingly difficult for aerobic organisms to find oxygen. The plant parts in the soil contain oxygen and the aerobic organisms invade these plant parts to survive. As a result, the cells of the underground plant parts die and the aerobic micro-organisms will digest the plant parts as long as they find oxygen and once the oxygen is depleted, the anaerobic bacteria will ferment the plant parts. The proportion of aerobic microorganisms will decrease due to a decrease in oxygen, while the proportion of anaerobic microorganisms will increase as long as sufficient nutrients are available for them.

The advantage of the layer of raw organic material is that the aerobic micro-organisms will remain alive and as the extra food for the micro-organisms is depleted, the activity of the micro-organisms will decrease, which reduces the need for oxygen and the oxygen can penetrate deeper and deeper into the soil so that the soil life can recover deeper and deeper into the soil. Is has been found that the above process causes the underground parts of plants to die off to a sufficient extent so that invasive exotic species will virtually stop sprouting.

Preferably, the layer of raw organic material contains more than 10 grams of sugars per square metre of soil to be treated. The mono- and disaccharides are a nutrient that can be directly used by organisms for their energy metabolism. Due to the presence of the mono- and disaccharides, microorganisms do not first have to invest energy in breaking down oligosaccharides and polysaccharides into glucose to meet their energy needs. When consuming the monosaccharides and disaccharides, oxygen is extracted from their environment. As a result, the layer of raw organic material allows less and less oxygen from the air above the soil to pass to the soil to be treated. Due to the soil activity already present, the oxygen in the soil will be consumed and may even become oxygen-fee. Because the layer of raw organic material causes the soil to become oxygen-free more quickly, the roots of the invasive exotics will weaken more quickly and the microorganisms will start digesting and fermenting the roots more quickly.

Preferably, a grass-like material is used for the layer of raw organic material. Grasses are known to contain relatively high level of sugar compounds. For example, fresh grass contains 165 g/kg dry matter on average. The dry matter of grass has an average sugar content of 130 gr/kg ds. Of this sugar content, about 25% consists of the quickly degradable sugars monosaccharides and disaccharides. With this, a kilogram of fresh grass contains on average about 5.36 grams of quickly degradable sugar. So when two kilograms of fresh grass are applied per square metre, the layer contains approximately 10 grams of quickly degradable sugars in the form of mono- and disaccharides.

Preferably, a layer of raw organic material of 1 - 50 cm is applied. The thickness applied depends on the type of soil, the amount of sugar-rich material with which the soil is enriched and the extent to which invasive exotic species are present in the soil. Thus, there are suspicions that the thickness of layer of raw organic material is in some extent inversely proportion to the amount of sugar-rich material. More preferably, a layer of 5 - 20 cm is applied, even more preferably a layer of 5 - 10 cm.

A large round bale of grass-like material will have a volume of around 1500 litres and, depending on the amount of water in the material, a weight that could be between 300 and 1500 kg. A round bale of well-dried grass will have a low weight and a round bale of freshly cut wet grass will have a weight that will be close to 1500 kg. Such a round bale can be used to apply a layer of raw organic material of between 10 - 75 m2. For example, if a round bale of fresh cut grass is spread over 75 m2, a 20 kg/m2 fresh cut grass will be applied. 20 kg/m2 of freshly cut grass corresponds to around 100 g/m2 of quickly degradable sugars in the form of mono- and disaccharides.

The thickness of the layer depends on the method of spreading over the surface. The more loosely the material is distributed, the thicker the layer is initially. Through the digestion process, the layer of raw organic material will continue to settle and become thinner.

In an alternative embodiment, a layer of raw organic material is applied first and then the layer of raw organic material is compressed by rolling. This makes the layer more compact and less permeable to oxygen. If, for example, 20 kg/m2 of freshly cut grass is spread, it will have a thickness of 5 - 10 cm before compression and a thickness of approximately 2 cm after compression.

The optional fifth step, involving a layer of decontaminated soil, biomass or mixture thereof aims to prevent blowing away/eating of the raw organic material by animals. It also acts as an insulation blanket for the layer of raw organic material and soil to be treated. The heat generated by the activity of soil organisms is thus better retained, which improves the activity of micro-organisms and thus optimises digestion and fermentation..

The following processes take place in the layer structure created by the method described above. The layer of raw organic matter starts to digest / ferment / fester and thus becomes an attractive place for soil organisms. The soil life present in the soil to be treated will thus be activated, enriched and multiplied, improving the digestion and fermentation processes in the soil to be treated. The fermentation layer created in the layer of organic material will make the soil beneath it oxygen-poor. This will make the plant parts in the soil vulnerable and the oxygen in the plant parts will cause the micro-organisms to ingest the plant parts as food, causing the plant parts to be digested and fermented as long as there are sufficient nutrients. When the nutrients run out, the activity of the microorganisms will decrease. As a result, the need for oxygen decreases and oxygen from the air can gradually penetrate deeper into the soil, increasing the number and activity of aerobic organisms and allowing soil life to rebalance and recover deeper and deeper.

The aerobic organisms from the soil to be treated have been able to settle in the upper part of the raw organic material and survive in this way. Because the nutrients in the soil to be treated at a certain point no longer provide the anaerobic organisms with sufficient food, the oxygen from the air can penetrate deeper and deeper into the soil. As a result, the aerobic organisms can also settle deeper and deeper into the soil. At the same time, lack of oxygen will also move deeper and deeper into the soil until it reaches the depth of the groundwater present. Characteristic is that, the applied layer of raw organic material allows the biodiversity to recover directly from above after the soil has been oxygen-free for a while.

The amount of nutrients with which the soil is enriched largely determines the minimum time that soil has been oxygen-free and therefore the extent to which the method is effective for controlling invasive exotic species.

The advantage of the first "in situ" method is that no cultivation is required. As a result, the original soil structure is preserved and not disturbed. Thus, in case of contaminated soil, the contamination is not spread over a larger area. Any archaeological objects in the soil are not damaged. Furthermore, no post-processing step is needed to reuse the soil.

A second "in situ" method differs from the first "in situ" method in that the soil at the treatment surface is first enriched with nutrients for micro-organisms in the soil to be treated by distributing a sugar-rich material of product over the soil by spreading or spraying and then mixing through the soil. The sugar-rich material of product is then distributed homogeneously through the soil.

Mixing can be done by milling, digging, ploughing the soil and/or with a mixing installation. The average thickness of the layer of mixed soil can be between 10 and 150 cm.

In an advantageous embodiment, so many grams of sugars per square metre are first distributed so that after mixing the soil to a predetermined depth, the soil contains an amount of 0.2 - 5 grams of sugars per litre of soil. Possibly more than 5 grams of sugars per litre of soil can be used. An excess of sugars in the soil can cause the soil to become acidic. This should be taken into account when choosing the amount of sugars to be used in the layer of raw organic material and sugar-rich material or product.

The advantage of mixing is that all the soil organisms in the layer of mixed soil have nutrients equally available to them and are therefore activated. The disadvantage is that soil cultivation is required and the original soil structure may be destroyed. Any cables and pipes lying in the soil can be damaged.

It is also possible to apply the inventive method for depot treatment of soil contaminated with invasive exotic species.

This method includes the following steps:
1) excavating all soil contaminated with invasive exotic species;
2) optionally placing the excavated contaminated soil in a first depot;
3) mixing the contaminated soil from the depot with nutrients for microorganism;
4) placing the mixed soil in a second depot;
5) applying a layer of raw organic material over the mixed soil in the second depot; and
6) optionally applying a layer of decontaminated soil, biomass or mixture of decontaminated soil and biomass over the layer of raw organic material.

The first depot can be a normal landfill site for soil. The second depot can be a place where the mixed soil is applied to ground level, or pavement, in a trench below ground level or in a trench silo. The soil is completely covered with a layer of raw organic material.

When a mixing installation is used, the excavated soil can be supplied directly to the mixing installation and the mixed soil can subsequently be applied to the depot where invasive exotic species in the soil will be controlled by decomposition and fermentation.

The control of the invasive exotic residues in the soil follows a process similar to "in situ". The soil contaminated with invasive exotic species residues becomes oxygen-free for a period of time by the layer of raw organic matter, causing the invasive exotic residues to be eat away by micro-organisms and digest. The height of the mixed soil in the second deposit and the amount of sugars and/or proteins per litre with which the soil is enriched determine the time it takes for the invasive exotic species to be sufficiently controlled. The thicker the layer of soil, the more time is needed to sufficiently control invasive exotic species. The time the mixed soil is in the depot can vary from 1 week to 1 year.

Described is an efficient method for controlling invasive exotic species in soil. The method described is environmentally friendly and uses organic materials. The method leads to amazing results and virtually eliminates the chance of weedy plants returning to the soil. The soil can be treated on site without affecting the soil structure. Invasive exotic species in the soil are controlled from top to bottom by keeping the soil oxygen-free from top to bottom for a certain period of time while at the same time soil life from top to bottom can recover above the oxygen-free soil. This makes it possible to plant new plants while in the underlying soil the roots of invasive exotics are still controlled without affecting the new planting.

## Claims

1. Method for biological control of invasive exotic species in soil, comprising:
- defining a treatment area of the soil to be treated;
**characterized in that** the method further comprises:
- applying a layer of raw organic material over the soil to be treated.

2. Method according to claim 1, further comprising:
- applying a layer of decontaminated soil, biomass or mixture thereof with a thickness of 5 - 15 cm over the layer of raw organic material.

3. Method according to claim 2, wherein the biomass comprises one or more products from a group consisting of: wood shreds, tree bark and cocoa shells.

4. Method according to one or more of claims 1 - 3, wherein the layer of raw organic material comprises one or more materials from a group consisting of: freshly mown grass, straw, hay, silage grass, roadside grass, ditch grass, chopped maize, chopped miscanthus and cutting from green manures.

5. Method according to one or more of claims 1 - 4, wherein the layer of raw organic material comprises at least 10 grams of sugars per square meter.

6. Method according to one or more of claims 1 - 5, wherein the layer of raw organic material at application has a thickness between 1 and 50 cm.

7. Method according to one or more of claims 1 - 6, wherein, before applying the layer of raw organic material, the soil associated with the treatment area is enriched with nutrients for micro-organisms in said soil.

8. Method according to claim 7, wherein the nutrients for microorganisms comprises a sugar-rich product.

9. Method according to claim 8, wherein the sugar-rich product comprises molasses.

10. Method according to any of claims 7 - 9, wherein enriching the soil with nutrients comprises spreading an amount of 100 - 2500 grams of sugars per square meter over the soil.

11. Method according to one of claims 7 - 9, wherein enriching the soil with nutrients involves adding the sugar-rich product to the soil in such a way that the soil contains an amount of 0.2 - 5 grams of sugars per liter of soil.

12. Method according to any of claims 7 - 9, wherein the sugar-rich product comprises one or more of monosaccharides and disaccharides.

13. Method according to any one of claims 1 - 12, wherein the invasive exotic species comprises one or more of Japanese Knotweed, Asian Knotweed, Canadian Goldenrod, Knotted Cyperus, Giant Balsam and Giant Hogweed.
